# EUROPÄISCHE PATENTANMELDUNG

(11) **EP 3 693 295 A1**
(43) Veröffentlichungstag der Anmeldung: **12.08.2020**
(21) Anmeldenummer: 20152281.0
(22) Anmeldetag: 16.01.2020
(51) Int. Cl.: B65G 9/00, B05B 13/02

(54) **TRAGVORRICHTUNG FÜR FAHRZEUGRÄDER, FÖRDERANLAGE ZUM FÖRDERN VON FAHRZEUGRÄDERN DURCH EINE BEHANDLUNGSANLAGE, BEHANDLUNGSANLAGE ZUM BEHANDELN VON FAHRZEUGRÄDERN MIT EINEM BEHANDLUNGSMITTEL UND VERFAHREN ZUM FÖRDERN VON FAHRZEUGRÄDERN**

(30) Priorität: 05.02.2019 DE 102019102809
(71) Anmelder: Eisenmann SE, 71032 Böblingen (DE)
(72) Erfinder: Rau, Thomas, 71032 Böblingen (DE)
(74) Vertreter: Ostertag & Partner Patentanwälte mbB

(57) **Zusammenfassung**

Die Erfindung betrifft eine Tragvorrichtung für Fahrzeugräder (14), insbesondere für eine Förderanlage (12) zum Fördern von Fahrzeugrädern (14) durch eine Behandlungsanlage (10), insbesondere eine Beschichtungsanlage, mit einer Koppeleinrichtung (28), mittels welcher die Tragvorrichtung (26) mit einer Antriebseinrichtung einer Förderanlage (12) koppelbar ist und einer Tragstruktur (32), welche mindestens eine Aufnahmeeinrichtung (34) umfasst, die dazu eingerichtet ist, ein Fahrzeugrad (14) aufzunehmen. Erfindungsgemäß umfasst die Aufnahmeeinrichtung (34) eine Positionieranordnung (41), durch welche Fahrzeugräder (14) unterschiedlicher Fahrzeugradtypen (40; 40.1, 40.2, 40.3) in unterschiedlichen Förderpositionen (F; F₁, F₂, F₃) aufnehmbar sind. Außerdem sind eine Förderanlage, eine Behandlungsanlage und ein Verfahren zum Fördern von Fahrzeugrädern angegeben.

## Beschreibung

### 1. Gebiet der Erfindung

Die Erfindung betrifft eine Tragvorrichtung für Fahrzeugräder, eine Förderanlage und ein Verfahren zum Fördern von Fahrzeugrädern durch eine Behandlungsanlage sowie eine Behandlungsanlage zum Behandeln von Fahrzeugrädern mit einem Behandlungsmittel gemäß den Oberbegriffen der Ansprüche 1, 19, 20 bzw. 21.

### 2. Beschreibung des Standes der Technik

Tragvorrichtungen der eingangs genannten Art werden seit vielen Jahren bei der Herstellung von Fahrzeugrädern eingesetzt. In der Fahrzeugindustrie werden von den zu behandelnden Fahrzeugrädern typischerweise mehrere Bereiche oder Zonen durchlaufen, die in Summe der Oberflächenbehandlung, insbesondere der Oberflächenveredelung dienen. Zielsetzung dieser mitunter häufig standardisierten Oberflächenveredelungsverfahren ist es, eine Verbesserung funktioneller und/oder dekorativer Eigenschaften der Oberfläche der Fahrzeugräder zu bewirken. Hierbei kann es sich beispielsweise um Verfahren zum Aufbringen eines die Korrosionsneigung verringernden Korrosionsschutzes oder eines den Verschleiß mindernden Verschleißschutzes, insbesondere den Verschleiß durch Abrasion, handeln. Bei in der Lebensmittelindustrie verwendeten Oberflächen kann es sich außerdem um eine Beschichtung handeln, welche die Neigung reduziert, dass sich auf der Oberfläche Mikroorganismen ansiedeln und die Oberfläche somit kontaminieren.

Farb- und/oder Glanzbeschichtungen, beispielsweise durch entsprechende Lacke, werden ebenfalls zu den Oberflächenveredelungsverfahren gezählt.

Bei Ausführung dieser Oberflächenveredelungsverfahren ist es oft vonnöten, die zu behandelnde Oberfläche vor-, zwischen- und/oder nachzubehandeln, bevor das betreffende Oberflächenveredelungsverfahren abgeschlossen ist. Beispiele hierfür sind das Auftragen eines die Oberflächenrauigkeit erhöhenden haftvermittelnden Konversionsmittels, das Aktivieren der Oberfläche für das nachfolgende Beschichten, beispielsweise mit einer Phosphatschicht, oder das Entfernen von Oberflächenverunreinigungen wie Korrosionsprodukten, Schmutzpartikeln, Fetten und/oder Ölen, beispielsweise mittels eines dafür vorgesehenen Beizmittels. Zu diesen Vor-, Zwischen oder Nachbehandlungsschritten zählen außerdem Spülvorgänge mit Wasser, Betriebswasser oder deionisiertem Wasser.

Auch Trocknungsschritte, durch welche die Fahrzeugräder für nachfolgende Behandlungsschritte vorbereitet werden oder in welchen eine bereits aufgebrachte Beschichtung getrocknet oder eingebrannt wird, sind häufig Teil derartiger Behandlungsverfahren. Das entsprechende Behandlungsmittel ist dann kein Medium, mittels welchem eine Beschichtung aufgebracht oder entfernt wird, vielmehr ist es ein Medium, mittels welchem aktiv oder passiv bewirkt wird, dass die aufgebrachte Beschichtung aushärtet. Im Falle von Strahlungstrocknungen ist dieses Medium elektromagnetische Strahlung, im Falle von Konvektionstrocknungen ein erwärmender Gasstrom und im Falle von Diffusionstrocknungen ein Medium, welches Wasser- oder Lösemittelmoleküle aus der Atmosphäre bindet und so zumindest passiv die Trocknung und damit das Behandlungsergebnis herbeiführt.

Nicht nur die Behandlungsmöglichkeiten sind heutzutage sehr divers, sondern auch die zu behandelnden Fahrzeugräder. Häufig werden Fahrzeugräder vieler unterschiedlicher Fahrzeugradtypen in dergleichen Behandlungsanlage behandelt. Bisher war es, um diese Diversität an Fahrzeugradtypen in der gleichen Behandlungsanlage behandeln zu können, erforderlich, die Tragvorrichtungen für jeden Fahrzeugradtyp individuell und manuell anzupassen. Dieses Vorgehen stellt durch die hohen steuerungstechnischen, logistischen und wartungsbezogen Anforderungen einen gleichsam hohen Kostenfaktor dar.

Tragvorrichtungen der oben erläuterten Art sind beispielsweise aus der DE 103 59 280 A1 und der DE 2 315 450 bekannt.

Nachteilig an diesen Vorrichtungen ist, dass es mitunter keinen unerheblichen Aufwand erfordert, die Tragvorrichtungen für einen neuen Fahrzeugradtypen bereitzustellen. Dieser Aufwand kann den Kosten- und/oder Zeitfaktor betreffen.

### ZUSAMMENFASSUNG DER ERFINDUNG

Aufgabe der Erfindung ist es daher, eine Tragvorrichtung, eine Förderanlage, eine Behandlungsanlage und ein Verfahren der eingangs genannten Art anzugeben, die den erwähnten Nachteilen aus dem Stand der Technik begegnet und eine flexiblere, schnellere und kostengünstigere Förderung von Fahrzeugrädern unterschiedlicher Fahrzeugradtypen durch eine Behandlungsanlage ermöglichen.

Diese Aufgabe wird erfindungsgemäß durch eine Tragvorrichtung für Fahrzeugräder, insbesondere für eine Förderanlage zum Fördern von Fahrzeugrädern durch eine Behandlungsanlage, insbesondere eine Beschichtungsanlage, gelöst, bei welcher die Aufnahmeeinrichtung ihrerseits eine Positionieranordnung umfasst, durch welche Fahrzeugräder unterschiedlicher Fahrzeugradtypen in unterschiedlichen Förderpositionen aufnehmbar sind.

Für eine besonders hohe Flexibilität beim Fördern von Fahrzeugrädern ist es günstig, wenn die Positionieranordnung eine oder mehrere Positionierstrukturen umfasst, durch welche für ein Fahrzeugrad eines ersten Fahrzeugradtyps eine erste Förderposition bezogen auf die Aufnahmeeinrichtung und für ein Fahrzeugrad eines von dem ersten Fahrzeugradtyp verschiedenen zweiten Fahrzeugradtyps eine von der ersten Förderposition verschiedene zweite Förderposition bezogen auf die Tragstruktur definiert sind. Dadurch lassen sich Fahrzeugräder unterschiedlicher Fahrzeugradtypen mit Hilfe der gleichen Aufnahmeeinrichtung fördern. Fahrzeugräder unterschiedlicher Fahrzeugradtypen nehmen dann unterschiedliche Förderpositionen auf der Aufnahmeeinrichtung ein.

Es ist vorteilhaft, wenn eine oder mehrere Positionierstrukturen als Anlagestruktur, gegen welche ein Fahrzeugrad in Richtung seiner Radachse anliegen kann, und/oder als Auflagestruktur, auf welcher ein Fahrzeugrad aufliegen kann, und/oder als Eingreifstruktur, welche in eine komplementäre Vertiefung oder Ausnehmung eines Fahrzeugrades eingreifen kann, ausgebildet sind.

In diesem Zusammenhang kann es ferner vorteilhaft sein, wenn das nicht zwangsläufig auf Förderzwecke ausgerichtete Raddesign ausgenutzt wird, um das Fahrzeugrad sicherer durch die Behandlungsanlage zu fördern, insbesondere um zu vermeiden, dass das Fahrzeugrad während des Transports von der Tragvorrichtung herunterfällt oder auf der Aufnahmeeinrichtung umkippt. Vorteilhafterweise können hierfür ein oder mehrere Positionierstrukturen in eine komplementäre, insbesondere in Umfangsrichtung umlaufende, erste Vertiefung eines Fahrzeugrads eingreifen.

Eine vorteilhafte Ausgestaltung sieht vor, dass eine oder mehrere Positionierstrukturen zumindest ein Hülsensegment und/oder zumindest ein Ringsegment und/oder zumindest einen Nutabschnitt und/oder einen von der Tragstruktur hervorstehenden Pin und/oder zumindest einen Wellenabschnitt bereitstellen.

Um Beschädigungen am Fahrzeugrad zu vermeiden, welche das Behandlungsergebnis erheblich verschlechtern können und damit zur Aussonderung des betreffenden Fahrzeugrads führen können, ist es besonders von Vorteil, wenn eine oder mehrere Positionierstrukturen zumindest bereichsweise aus einem Kunststoffmaterial gefertigt sind. Hierdurch wird ein direkter Kontakt einer in der Regel ein metallisches Material aufweisenden Oberfläche des Fahrzeugrads mit einer ebenfalls in der Regel ein metallisches Material aufweisenden Oberfläche der Aufnahmeeinrichtung vermieden. Das Risiko für Beschädigungen durch Abrasion, der wiederum besonders begünstigt wird, wenn zwei härtere Materialien mit hoher Oberflächenrauigkeit übereinander reiben, wird durch zumindest bereichsweises Fertigen der einen oder der mehreren Positionierstrukturen aus einem Kunststoffmaterial erheblich gesenkt.

Günstig ist es, wenn das Kunststoffmaterial ein thermoplastisches Polymer, insbesondere ein Polyamid (PA), ein Polylactat (PLA), Polymethylmethacrylat (PMMA), Polyethylen (PE), Polyethylenterephthalat (PET), Polyetheretherketon (PEEK), Polytetrafluorethylen (PTFE), Polypropylen (PP), Polyvinylchlorid (PVC), Fluorkautschuk (FKM) oder eine Mischung aus den vorgenannten Materialien ist.

In einer besonders vorteilhaften Ausgestaltung werden eine oder mehrere Positionierstrukturen durch ein oder mehrere Positionierelemente bereitgestellt. Dieses eine oder diese mehreren Positionierelemente sind vorzugsweise, um eine gegenüber neuen Fahrzeugradtypen besonders flexible Positionieranordnung zu erhalten, lösbar befestigbar und/oder verschiebbar. Um die Positionieranordnung noch flexibler gegenüber möglichen Änderungen bei den zu fördernden Fahrzeugradtypen zu gestalten, kann es ferner von Vorteil sein, wenn ein oder mehrere Positionierelemente einen längsseitig durchlaufenden Schlitz aufweisen und an der Aufnahmeeinrichtung anklemmbar oder zumindest auf einen Teil der Aufnahmeeinrichtung aufschiebbar sind.

Mindestens ein Positionierelement weist vorteilhafterweise eine Aussparung auf, derart, dass dieses bereichsweise um ein weiteres Positionierelement und/oder um eine Positionierstruktur herum anordenbar ist.

Ein weiterer vorteilhafter Aspekt ist, wenn ein oder mehrere Positionierelemente zumindest abschnittsweise einen kreisförmigen oder polygonalen Querschnitt aufweisen. Dabei kann es in diesem Sinne ausreichend sein, wenn bei einem beispielsweise im Wesentlichen hohlzylindrischen oder hohlprismatischen Positionierelement eine innere oder eine äußere Querschnittskontur im Wesentlichen kreisförmig oder polygonal ist. Das heißt, ein derartiges Positionierelement kann zwar an einem zylindrischen Körper angeordnet sein, aber dennoch eine andersartig gestaltete Außenform aufweisen.

Von Vorteil ist es, wenn die Aufnahmeeinrichtung zwei Tragprofile, insbesondere zwei parallel zueinander verlaufende Tragprofile, aufweist, welche eine Tragebene definieren und welche die Positionieranordnung tragen. Eine oder mehrere Eingreifstrukturen können dann auf der gleichen Seite der Tragebene angeordnet sein und aufeinander zuweisen, so dass diese jeweils in eine komplementäre, insbesondere in Umfangsrichtung umlaufende, zweite Vertiefung eines Fahrzeugrads eingreifen können.

Noch flexibler wird die Positionieranordnung und damit die Tragvorrichtung, wenn die Tragprofile zum Aufnehmen eines oder mehrerer lösbar befestigbarer Positionierelemente, insbesondere von Positionierelementen, die eine Eingreifstruktur bereitstellen, mit Aufnahmelöchern versehen sind, wobei durch jedes Aufnahmeloch eine weitere Förderposition definierbar ist.

Vor allem Fahrzeugräder besonders schmaler Fahrzeugradtypen neigen dazu, während des Förderns in der Aufnahmeeinrichtung in Richtung der Radachse umzukippen, wenn sie auf einem Felgenhorn aufliegen. Vorteilhaft ist es daher, mindestens ein Fahrzeugrad, insbesondere ein Fahrzeugrad eines kippgefährdeten Fahrzeugradtyps, derart von der Aufnahmeeinrichtung aufzunehmen, dass seine Radachse zu der Tragebene geneigt ist. Durch den Eingriff einer Eingreifstruktur in die in Umfangsrichtung umlaufende erste oder zweite Vertiefung wird ein Fahrzeugrad eines kippgefährdeten Fahrzeugradtyps sowohl durch die Eingreifstruktur als auch durch die zur Tragebene geneigte Radachse verkeilt. Ein derartiges Fahrzeugrad behält dann bei normalem Betrieb der Förderanlage seine Förderposition bei und neigt bei Erschütterungen oder dergleichen weniger dazu, sich aus der Förderposition zu lösen und beispielsweise umzukippen oder herunterzufallen.

Vorteilhaft ist es, wenn von der Tragvorrichtung zeitgleich wenigstens zwei Fahrzeugräder unterschiedlicher Fahrzeugradtypen aufnehmbar sind. Eine weitere besonders vorteilhafte Ausführung sieht vor, dass die Tragvorrichtung wenigstens zwei Aufnahmeeinrichtungen umfasst.

Bei einer erfindungsgemäßen Förderanlage zum Fördern von Fahrzeugrädern durch eine Behandlungsanlage, insbesondere eine Beschichtungsanlage, wird die oben genannte Aufgabe dadurch gelöst, dass die Förderanlage mindestens eine erfindungsgemäße Tragvorrichtung hat, die zumindest einige der oben zur Tragvorrichtung erläuterten Merkmale umfasst.

Bei einer erfindungsgemäßen Behandlungsanlage, insbesondere einer Beschichtungsanlage, zum Behandeln, insbesondere zum Beschichten, von Fahrzeugrädern mit einem Behandlungsmittel, insbesondere mit einem Beschichtungsmittel, insbesondere einem Lack, wird die oben genannte Aufgabe dadurch gelöst, dass die Behandlungsanlage die erfindungsgemäße Förderanlage zum Fördern von Fahrzeugrädern verwendet.

Bei einem Verfahren zum Fördern von Fahrzeugrädern durch eine Behandlungsanlage, insbesondere eine Beschichtungsanlage, wird die oben genannte Aufgabe dadurch gelöst, dass Fahrzeugräder unterschiedlicher Fahrzeugradtypen in unterschiedlichen Förderpositionen durch die erfindungsgemäße Förderanlage gefördert werden.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine Ansicht quer zu einer Förderrichtung einer Behandlungsanlage zum Behandeln von Fahrzeugrädern mit einem Beschichtungsmittel, die eine Förderanlage zum Fördern von Fahrzeugrädern mit einer Vielzahl von Tragvorrichtungen umfasst;
- Figuren 2a und 2b: Ansichten eines Ausführungsbeispiels der Tragvorrichtung für Fahrzeugräder mit zwei Fahrzeugrädern unterschiedlicher Fahrzeugradtypen, die durch eine Positionieranordnung unterschiedlichen Förderpositionen gehalten werden können;
- Figuren 3a und 3b: Ansichten der Tragvorrichtung gemäß Figur 2a bzw. Figur 2b mit zwei Fahrzeugrädern vom gleichen Fahrzeugradtyp in unterschiedlichen Förderpositionen;
- Figuren 4a bis 4c: Teilansichten eines Ausführungsbeispiels der Aufnahmeeinrichtung der Tragvorrichtung mit jeweils in unterschiedlichen Förderpositionen aufgenommenen Fahrzeugräder unterschiedlicher Fahrzeugradtypen;
- Figur 5a: eine Ansicht eines ersten Ausführungsbeispiels eines Tragprofils der Aufnahmeeinrichtung mit einem ersten Ausführungsbeispiel der Positionieranordnung mit drei Positionierelementen gemäß den Figuren 2a bis 4c;
- Figuren 5b und 5c: Querschnitte des Tragprofils gemäß Figur 5a entlang der Schnittlinien Vb-Vb bzw. Vc-Vc in Figur 5a;
- Figur 6: eine Ansicht des Tragprofils aus Blickrichtung des Pfeiles VI in Figur 5a;
- Figuren 7a und 7b: Ansichten eines weiteren Ausführungsbeispiels des Tragprofils mit einem weiteren Ausführungsbeispiel der Positionieranordnung mit drei Positionierelementen und mehreren Aufnahmelöchern aus Blickrichtung der Pfeile Vlla in Figur 7b bzw. Vllb in Figur 7a.

### BESCHREIBUNG BEVORZUGTER AUSFÜHRUNGSBEISPIELE

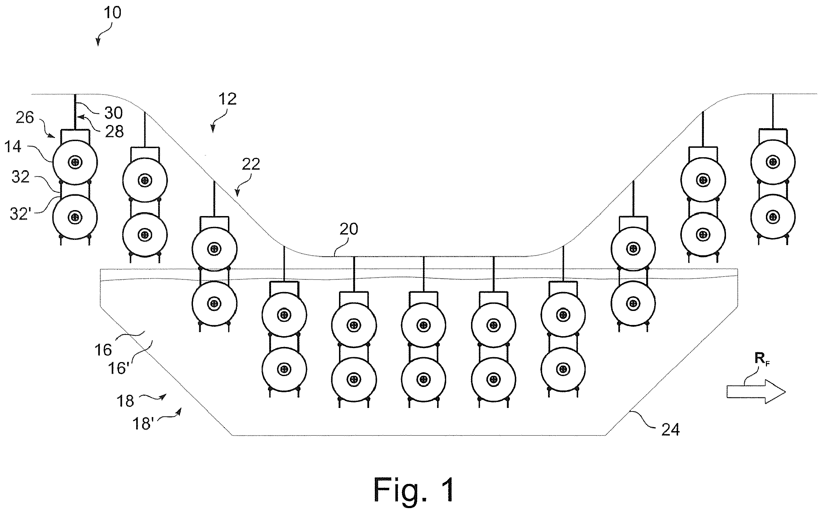

Zunächst wird auf die Figur 1 Bezug genommen. In dieser bezeichnet 10 eine Behandlungsanlage mit einer Förderanlage 12 für Fahrzeugräder 14.

Bei der Behandlungsanlage 10 handelt es sich um eine Anlage zum Behandeln von Fahrzeugrädern 14 mit einem Behandlungsmittel 16. Das verwendete Behandlungsmittel 16 kann beispielsweise ein Beschichtungsmittel wie ein Lack oder ein die Oberflächenrauigkeit erhöhendes und damit die Gesamtfläche der Oberfläche vergrößerndes haftvermittelndes Konversionsmittel zur Lack-Vorbehandlung der Fahrzeugräder 14 sein. Von der Erfindung umfasst sind aber auch solche Behandlungsanlagen 10, welche die Oberfläche der Fahrzeugräder 14 für nachfolgendes Beschichten aktivieren, beispielsweise mit einer Phosphatschicht, oder welche Oberflächenverunreinigungen wie Korrosionsprodukte, Schmutzpartikel, Fette und/oder Öle vor dem Beschichten von den Fahrzeugrädern 14 entfernen. Auch Teilanlagenbereiche, in denen ein oder mehrere Spülvorgänge mit Wasser, Betriebswasser oder deionisiertem Wasser durchgeführt werden, können eine Ausgestaltung der erfindungsgemäßen Behandlungsanlage 10 sein.

Trocknungsanlagen oder dergleichen, in welchen die Fahrzeugräder 14 für einen nachfolgenden Behandlungsprozess vorbereitet werden oder in welchen eine bereits aufgebrachte Beschichtung, beispielsweise eine Nass- oder Pulverlackbeschichtung, getrocknet beziehungsweise eingebrannt wird, werden ebenfalls als Behandlungsanlage 10 verstanden. Das Behandlungsmittel 16 ist dann im Falle von Strahlungstrocknungen elektromagnetische Strahlung, im Falle von Konvektionstrocknungen ein erwärmender Gasstrom und im Falle von Diffusionstrocknungen ein Medium, welches Wasser- oder Lösemittelmoleküle aus der Atmosphäre bindet und so zumindest passiv die Trocknung und damit das Behandlungsergebnis herbeiführt.

Mittels der Förderanlage 12, die in der Figur 1 als Hängeförderanlage ausgeführt ist, beispielsweise als aus dem Stand der Technik an und für sich bekanntes sogenanntes Power&Free-System mit Schleppkette oder als Elektrohängebahn-System mit einzeln und unabhängig voneinander angetriebenen Hängefahrzeugen, werden Fahrzeugräder 14 beispielsweise von einer nicht dargestellten Abhol- oder Übergabestation zu einem Behandlungsbereich 18 und nach Behandlung von diesem weiter zu einem weiteren Behandlungsbereich 18 oder einer weiteren Übergabestation gefördert. Alternativ kann die Förderanlage 12 aber auch als Bodenförderanlage mit einer oder mehreren Rollenbahnen, Kettenförderern mit Schleppkette und/oder schienen- oder flurgebundenen autonom ansteuerbaren Transportwagen ausgeführt sein. Systeme mit flurgebundenen autonomen Transportwagen werden allgemein als FTS-Systeme bezeichnet.

Die Fahrzeugräder 14 werden entlang einer Förderstrecke 20 und in einer Förderrichtung R_{F} gefördert, wobei die Förderstrecke 20 bei Hängeförderanlagen im Wesentlichen durch ein über einem nicht dargestellten Anlagenboden, gegebenenfalls an der Anlagendecke, angebrachtes Tragsystem 22 vorgegeben ist.

Bei Bodenförderanlagen kann die Förderstrecke 20 in ähnlicher Weise wie bei Hängeförderanlagen über ein am Anlagenboden verlaufendes Tragsystem 22, beispielsweise ein Schienensystem, vorgegeben sein. Bei FTS-Systemen können seitliche Begrenzungen oder Steuermarkierungen auf dem Anlagenboden die Förderstrecke 20 definieren. Bei derartigen Förderanlagen 12 ist ein am Boden verlaufendes Tragsystem 22 nicht erforderlich.

Beim vorliegenden Ausführungsbeispiel ist der Behandlungsbereich 18 als Tauchbehandlungsbereich 18' ausgeführt, in welchem die Fahrzeugräder 14 einer Tauchbehandlung unterzogen werden.

Hierfür werden die Fahrzeugräder 14 in ein mit einem Tauchbehandlungsmittel 16' gefülltes Tauchbecken 24 abgesenkt, über eine gewisse Teil-Förderstrecke der Förderstrecke 20 durch das Tauchbecken 24 gefördert und wieder vollständig aus dem Tauchbecken 24 heraus gefördert. "Die Fahrzeugräder 14 können bereits so früh angehoben werden, dass überschüssiges Tauchbehandlungsmittel 16' zu großen Teilen von den Fahrzeugrädern 14 in das Tauchbecken 24 abtropfen kann, bevor eine andere Station oder ein anderer Bereich angefahren wird. Dies spart insbesondere Kosten für das Rezyklieren des Tauchbehandlungsmittels 16' ein, da dieses direkt nach dessen Verwertung wieder in das Tauchbecken 24 abtropfen kann.

Das Anheben und Absenken der Fahrzeugräder 14 kann wie im vorliegenden Ausführungsbeispiel der Förderanlage 12 passiv dadurch erfolgen, dass das Tragsystem 22 die Förderhöhe der Fahrzeugräder 14 durch einen kurvenförmigen Verlauf, innerhalb welchem das Tragsystem 22 mindestens eine Steigung und mindestens ein Gefälle aufweist, vorgibt. Anheben und Absenken gleichermaßen können aber auch aktiv ausgeführt werden, d.h., Anheb- und Absenkbewegung erfolgen nicht durch einen vorgegebenen Kurvenverlauf, sondern durch eine entsprechende, angetriebene Hub-/Senkeinrichtung.

Wie Figur 1 außerdem zu entnehmen ist, werden die Fahrzeugräder 14 von Tragvorrichtungen 26 getragen, von denen aus Gründen der Übersichtlichkeit lediglich eine mit einem Bezugszeichen versehen ist. Die lediglich beispielhaft für Hängeförderanlagen konzipierten Tragvorrichtungen 26 können, wie oben bereits erwähnt, durch einfache Anpassungen ebenfalls für Bodenförderanlagen konzipiert werden.

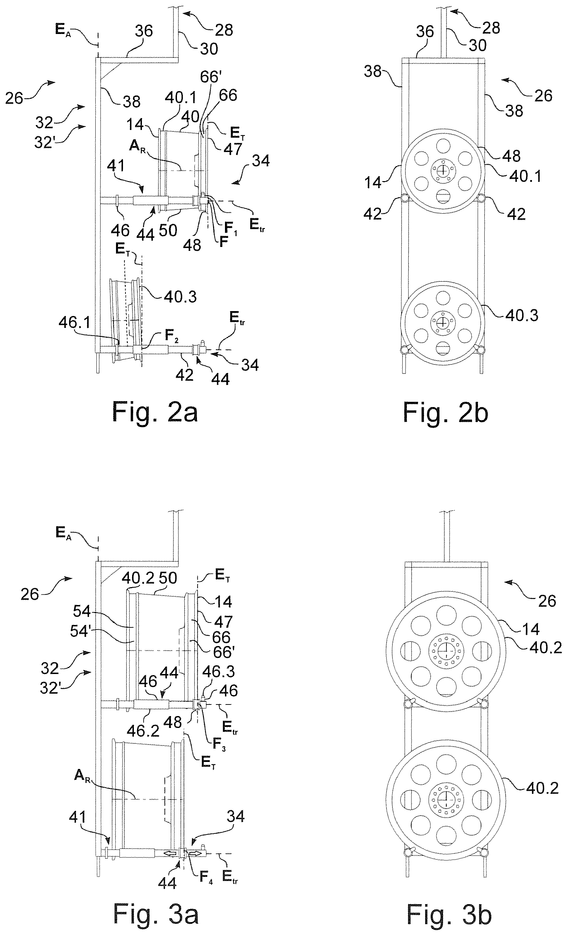

Als nächstes wird auf die Figuren 2a bis 3b Bezug genommen. In diesen sind wieder aus Gründen der Einfachheit und Übersichtlichkeit einige der dort gezeigten Bauteile und Komponenten nicht immer mit einem Bezugszeichen versehen.

In diesen Figuren ist nun ein Ausführungsbeispiel einer derartigen Tragvorrichtung 26 dargestellt. Die Tragvorrichtung 26 umfasst eine Koppeleinrichtung 28, über welche die Tragvorrichtung 26 mit einer Antriebseinrichtung der Förderanlage 12 gekoppelt werden kann. Die Koppeleinrichtung 28 kann beispielsweise als Schleppanker für Power&Free-Systeme oder als Befestigungseinrichtung an einen Transportwagen von Elektrohängebahn-Systemen ausgeführt sein kann. Die Koppeleinrichtung 28 ist in den Figuren 2a bis 3b lediglich schematisch durch einen vertikalen Verbindungsabschnitt 30 angedeutet.

Die Tragvorrichtung 26 umfasst ferner eine Tragstruktur 32, welche vorliegend zwei Aufnahmeeinrichtungen 34 zum Aufnehmen jeweils eines Fahrzeugrads 14 umfasst. Die Tragstruktur 32 ist vorliegend beispielhaft als Tragrahmen 32' ausgeführt, welcher mit der Koppeleinrichtung 28 über einen hier horizontalen Verbindungsabschnitt 36 der Tragstruktur 32 verbunden ist.

Die Tragstruktur 32 weist vorliegend zwei im Wesentlichen parallel zueinander verlaufende Tragstreben 38 auf, welche die zwei dargestellten Aufnahmeeinrichtungen 34 tragen; nicht eigens gezeigte Ausführungsbeispiele der Tragvorrichtung 26 können aber auch mehr oder weniger als zwei Aufnahmeeinrichtungen 34 umfassen. Ferner kann die Tragstruktur 32 beispielsweise auch lediglich eine einzige vertikale oder mehrere parallel zueinander verlaufende oder untereinander einen Winkel einschließende Tragstreben 38 umfassen und keinen horizontalen Verbindungsabschnitt 36 aufweisen. Ohne den horizontalen Verbindungsabschnitt 36 kann die Tragstruktur 32 auch im Wesentlichen als Verlängerung des vertikalen Verbindungsabschnitts 30 ausgeführt sein.

Bei diesen nicht dargestellten Ausführungsbeispielen ist es möglich, dass die nicht eigens mit einem Bezugszeichen versehenen Längsachsen der einen oder der mehreren Tragstreben 38 zu einer Ausrichtungsebene E_{A} geneigt sind, die hier im Wesentlichen vom Verbindungsabschnitt 30 festgelegt wird und im dargestellten Ausführungsbeispiel im Betrieb der Förderanlage 12 senkrecht zum Anlagenboden steht und sich entlang der Förderrichtung R_{F} erstreckt.

Durch die Aufnahmeeinrichtung 34 können Fahrzeugräder 14 unterschiedlicher Fahrzeugradtypen 40 in unterschiedlichen Förderpositionen F aufgenommen werden. Hierfür umfasst die Aufnahmeeinrichtung 34 eine Positionieranordnung 41, die im vorliegenden Ausführungsbeispiel von zwei im Wesentlichen parallel zueinander und mit ihrer Längsachse im Wesentlichen senkrecht zur Ausrichtungsebene E_{A} verlaufenden Tragprofilen 42 getragen wird.

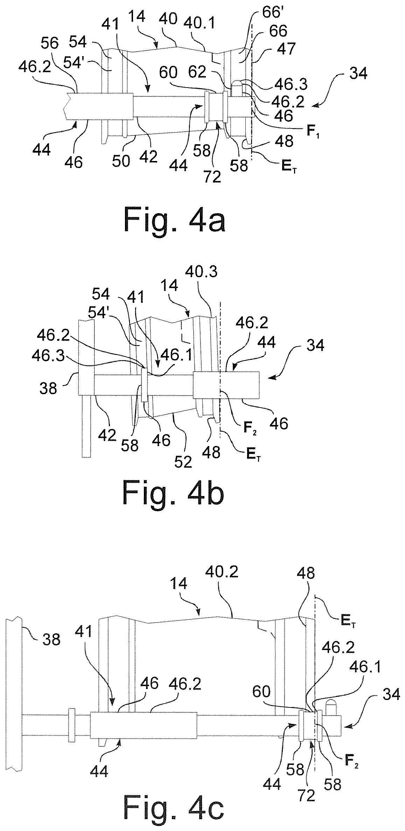

Die Positionieranordnung 41 umfasst, wie in den in den Figuren 2a bis 3b gezeigten Varianten dargestellt ist, mehrere Positionierelemente 44, die wiederum jeweils mindestens eine Positionierstruktur 46 bereitstellen. In nicht dargestellten Varianten können eine oder mehrere Positionierstrukturen 46 aber auch direkt auf oder an dem Tragprofil 42 ausgebildet und in dieses integriert sein, ohne dass hierfür eigens Positionierelemente 44 erforderlich wären. Die Positionierstrukturen 46 können dann beispielsweise als Vorwölbungen, Vorsprünge oder dergleichen und/oder Einstülpungen, Einbuchtungen oder dergleichen einer nicht mit einem Bezugszeichen versehenen Profilaußenfläche ausgebildet sein. Weitere Ausführungsformen der Positionierstrukturen 46 werden weiter unten in Bezug auf die Figuren 4a bis 4c erläutert.

Die Tragprofile 42 definieren für die Fahrzeugräder 14 eine Tragebene Eₜᵣ. Der Winkel, den die Tragebene Eₜᵣ mit der Ausrichtungsebene E_{A} einschließt, kann bei zwei vorhandenen Aufnahmeeinrichtungen 34, also auch bei der gleichen Tragvorrichtung 26, unterschiedlich sein.

Durch diese Positionierstrukturen 46 wird für ein Fahrzeugrad 14 eines ersten Fahrzeugradtyps 40.1 eine erste Förderposition F₁ bezogen auf die Aufnahmeeinrichtung 34 und für ein Fahrzeugrad 14 eines von dem ersten Fahrzeugradtyp 40.1 verschiedenen zweiten Fahrzeugradtyps 40.2, 40.3 eine von der ersten Förderposition F₁ verschiedene zweite Förderposition F₂, F₃ bezogen auf die Aufnahmeeinrichtung 34 definiert.

Dies bedeutet, dass durch die in diesen Varianten mehrfach vorhandenen Positionierstrukturen 46 der Positionieranordnung 41 von der gleichen Aufnahmeeinrichtung 34 Fahrzeugräder 14 unterschiedlicher Fahrzeugradtypen40.1, 40.2, 40.3 in unterschiedlichen Förderpositionen F₁, F₂, F₃ aufgenommen werden können. Konkret bedeutet dies für das Ausführungsbeispiel der Positionieranordnung 41 der Figuren 2a und 2b, dass für jeden Fahrzeugradtyp 40.1, 40.2, 40.3 eine Förderposition F₁, F₂, F₃ definiert ist.

In den Figuren 3a und 3b ist außerdem dargestellt, dass durch die Positionieranordnung 41 eine weitere Förderposition F₄ definiert werden kann, indem die Positionierelemente 44 verschoben werden Bei der in den Figuren 3a, 3b oben gezeigten Aufnahmeeinrichtung 34 definieren die Positionierelemente 44 die Förderposition F₃, während die Positionierelemente 44 der unteren Aufnahmeeinrichtung 34 diese Förderposition F₄ definieren.

Die Förderpositionen F₁, F₂, F₃, F₄ bestimmen sich jeweils durch eine senkrecht zu einer Radachse A_{R} des Fahrzeugrads 14 verlaufende Tangentialebene E_{T}, die den äußersten Punkt, oder im Falle mehrerer äußerster Punkte den äußersten Bereich, des Profils einer Stirnseite 47 berührt; vorliegend ist dies die von der Tragstruktur 32 abgewandte Stirnseite 47. Dieser Punkt oder dieser Bereich kann sich an einem Felgenhorn 48 oder in einem von dem Felgenhorn 48 in Umfangsrichtung begrenzten Bereich der Stirnseite 47 befinden. Als Bezug für die Tangentialeben E_{T} kann jedoch auch die gegenüberliegende Stirnseite herangezogen werden. Fahrzeugräder 14 eines gleichen Fahrzeugradtyps 40 können dabei je nach Ausgestaltung der Positionieranordnung 41 auf einerAufnahmeeinrichtunge34 unterschiedliche Förderpositionen F₁, F₂, F₃, F₄ einnehmen. Bezogen auf zwei vorhandene Aufnahmeeinrichtungen 34 können dabei jedoch Fahrzeugräder 14 unterschiedlicher Fahrzeugradtypen 40.1, 40.2, 40.3 auf unterschiedlichen Aufnahmeeinrichtungen 34 gleiche Förderpositionen F einnehmen.

Dabei kann sich ein Fahrzeugradtyp 40 eines bestimmten Fahrzeugrades 14 sowohl über die Erstreckung des Fahrzeugrads 14 in Richtung der Radachse A_{R} als auch über die Profilform einer in Umfangsrichtung umlaufenden Reifenauflagefläche 50 bestimmen.

Beispielhaft erwähnt seien für die Fahrzeugradtypen 40.1, 40.2, 40.3 Fahrzeugräder 14 für mehrspurige Kraftfahrzeuge, wie Personenkraftwagen und Lastkraftwagen, und einspurige Kraftfahrzeuge, wie beispielsweise Motorräder. Fahrzeugräder 14 eines besonders schmalen Fahrzeugradtyps 40.3, der insbesondere häufige Verwendung bei besonders leicht zu konstruierenden Personenkraftwägen und/oder Motorrädern oder dergleichen findet, sind bei bekannten Fördersystemen häufig besonders kippgefährdet von einer vorhandenen Aufnahmestruktur aufgenommen. Um der Kippgefährdung entgegenzuwirken, ist die Positionieranordnung 41 so konzipiert, dass solche Fahrzeugtypen, hier der Fahrzeugradtyp 40.3, derart auf der Aufnahmeeinrichtung 34 angeordnet werden können, dass die Radachse A_{R} bezogen auf die Tragebene Eₜᵣ geneigt ist.

Bei dem dargestellten Ausführungsbeispiel der Tragvorrichtung 26 kann jede Aufnahmeeinrichtung 34 ein Fahrzeugrad 14 aufnehmen. Bei nicht eigens dargestellten Varianten können die Aufnahmeeinrichtungen 34 durch entsprechende Ausgestaltung aber auch mehr als ein Fahrzeugrad 14 aufnehmen. Bei einer dieser nicht dargestellten Ausführungen ist es möglich, mehrere Fahrzeugräder 14 unterschiedlicher Fahrzeugradtypen 40.1, 40.2, 40.3 auf ein und derselben Aufnahmeeinrichtung 34 entlang der Tragebene Eₜᵣ hintereinander anzuordnen.

Die vorliegend von mehreren Positionierelementen 44 bereitgestellten Positionierstrukturen 46 sind als Anlagestruktur 46.1, gegen welche ein Fahrzeugrad 14 in Richtung der Radachse A_{R} anliegen kann und/oder als Auflagestruktur 46.2, auf welcher ein Fahrzeugrad 14 aufliegen kann und/oder als Eingreifstruktur 46.3, welche in eine komplementäre Vertiefung oder Ausnehmung eines Fahrzeugrads 14 eingreifen kann, ausgebildet.

In den Figuren 4a bis 4c ist jeweils ein Ausschnitt einer Aufnahmeeinrichtung 34 mit einem Fahrzeugrad 14 eines bestimmten Fahrzeugradtyps 40.1, 40.2 bzw. 40.3 in einer vergrößerten Ansicht dargestellt. Wie zu erkennen ist, können zusätzlich dazu, dass eine als Eingreifstruktur 46.3 ausgebildete Positionierstruktur 46 zugleich eine Auflagestruktur 46.2 oder eine als Auflagestruktur 46.2 ausgebildete Positionierstruktur 46 zugleich eine Anlagestruktur 46.1 bereitstellt, außerdem auch Positionierelemente 44 zugleich mehrere dieser Positionierstrukturen 46.1, 46.2, 46.3 bereitstellen; je nachdem, welche Funktion sie für das Fahrzeugrad 14 eines bestimmten Fahrzeugradtyps 40.1, 40.2, 40.3 erfüllen.

So kann ein Fahrzeugrad 14, wie es exemplarisch in Figur 4b dargestellt ist, beispielsweise derart von der Aufnahmeeinrichtung 34 aufgenommen sein, dass es zugleich mit einem Außenabschnitt 52 an einer eine Anlagestruktur 46.1 bereitstellenden Positionierstruktur 46 anliegt, auf einer von derselben Positionierstruktur 46 außerdem bereitgestellten Auflagestruktur 46.2 mit demselben Außenabschnitt 52 aufliegt, und dass eine Eingreifstruktur 46.3 derselben Positionierstruktur 46 in eine erste komplementäre Vertiefung 54 des Fahrzeugrads 14 eingreift. Bei der ersten komplementären Vertiefung 54 handelt es sich, wie aus den Figuren 4a bis 4c ersichtlich, um eine erste, in Umfangsrichtung umlaufende Vertiefung 54'.

Ein Anliegen eines Fahrzeugrades 14 an eine Struktur bestimmt sich hier dadurch, dass das Fahrzeugrad 14 mit dem Außenabschnitt 52 lediglich eine Anlagestruktur 46.1 berührt, wobei die Anlagestruktur 46.1 aber keine Last des Fahrzeugrads 14 aufnimmt. Hierdurch wird beispielsweise bewirkt, dass das Fahrzeugrad 14 entlang der Tragebene Eₜᵣ in Richtung seiner Radachse A_{R} im Wesentlichen fixiert und damit an einer axialen Verschiebung entlang der Radachse A_{R} und/oder entlang der Tragebene Eₜᵣ während des Förderns im Wesentlichen gehindert wird.

Unter Aufliegen wird verstanden, dass das Fahrzeugrad 14 auf der betreffenden Fläche der Auflagestruktur 46.2 aufliegt und von dieser während des Förderns zumindest teilweise getragen wird, das heißt konkret, dass die Auflagestruktur 46.2 die Last des Fahrzeugrads 14 zumindest teilweise trägt.

Unter einem Eingreifen wird allgemein eine Komplementärinteraktion einer Eingreifstruktur 46.3 mit einer komplementären Vertiefung 54 am Fahrzeugrad 14 verstanden. Wenn das Fahrzeugrad 14 durch eine Eingreifstruktur 46.3 getragen wird, kann die Eingreifstruktur 46.3 nach obiger Definition beispielsweise zugleich eine Auflagestruktur 46.2 sein.

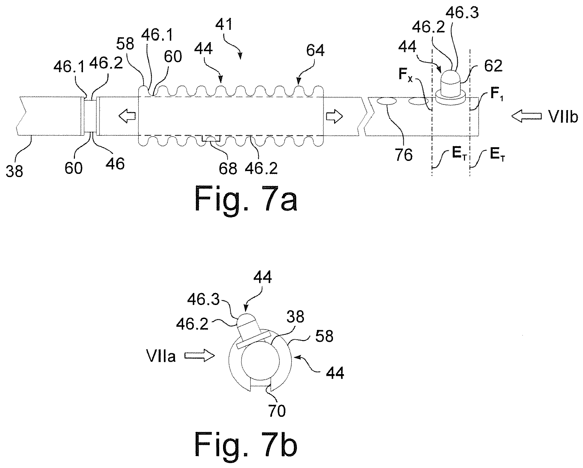

Ein oder mehrere Positionierstrukturen 46.1, 46.2, 46.3 können, wie insbesondere den Figuren 4a bis 4c und 7a zu entnehmen ist, ein Hülsensegment 56, ein Ringsegment 58, einen Nutabschnitt 60, einen hervorstehenden Pin 62 und/oder einen Wellenabschnitt 64 bereitstellen.

Wie die Figuren 2a und 4b zeigen, kann mit derartigen Positionierstrukturen 46 ergänzend verhindert werden, dass ein Fahrzeugrad 14 eines kippgefährdeten Fahrzeugradtyps 40.3 während des Förderns in Richtung der Radachse A_{R} umkippt oder gar von der Aufnahmeeinrichtung 34 herunterfällt.

Die Figuren 2a und 4a veranschaulichen zwei von den Eingreifstrukturen 46.3 bereitgestellte hervorstehende Pins 62, die auf der gleichen Seite der Tragebene Eₜᵣ angeordnet sind und aufeinander zuweisen. Diese zwei Pins 62 greifen bei dem vorliegenden Ausführungsbeispiel der Tragvorrichtung 26 jeweils in eine zweite komplementäre Vertiefung 66, insbesondere eine zweite in Umfangsrichtung umlaufende Vertiefung 66', des Fahrzeugrads 14 ein. Die zweite Vertiefung 66, beziehungsweise die zweite in Umfangsrichtung umlaufende Vertiefung 66', schließt im vorliegenden Ausführungsbeispiel an das Felgenhorn 48 an, welches seinerseits die Stirnseite 47 des Fahrzeugrads 14 radial abschließt. Bei der in Umfangsrichtung umlaufenden zweiten Vertiefung 66' kann es sich um die gleiche Vertiefung 66 handeln, in welche die hervorstehenden Pins 62 eingreifen, es können aber auch zwei unterschiedliche in Umfangsrichtung umlaufende Vertiefungen 66 sein.

Wie nun vor allem den Figuren 3a, 5a bis 5c sowie 7a und 7b zu entnehmen ist, sind die Positionierelemente 44 der Positionieranordnung 41 lösbar befestigbar und/oder verschiebbar ausgebildet, um eine größtmögliche Flexibilität beim Bestücken der Aufnahmeeinrichtung 34 mit Fahrzeugrädern 14 unterschiedlicher Fahrzeugradtypen 40.1, 40.2, 40.3 zu ermöglichen. Hierfür weisen die Positionierelemente 44 im vorliegenden Ausführungsbeispiel lediglich schematisch angedeutete Arretierungsmittel 68 auf, die beispielsweise als Madenschraube und als weibliches Madengewinde ausgeführt sein können. Mit einem derartigen Arretierungsmittel 68 ist es möglich, ein Positionierelement 44 in einer geeigneten Position zu arretieren und bei Bedarf, beispielsweise, wenn sich ein oder mehrere Fahrzeugradtypen 40 ändern und damit die Positionieranordnung 41 daran angepasst werden muss, zu lösen, parallel zur Tragebene Eₜᵣ zu verschieben und hiernach wieder zu arretieren.

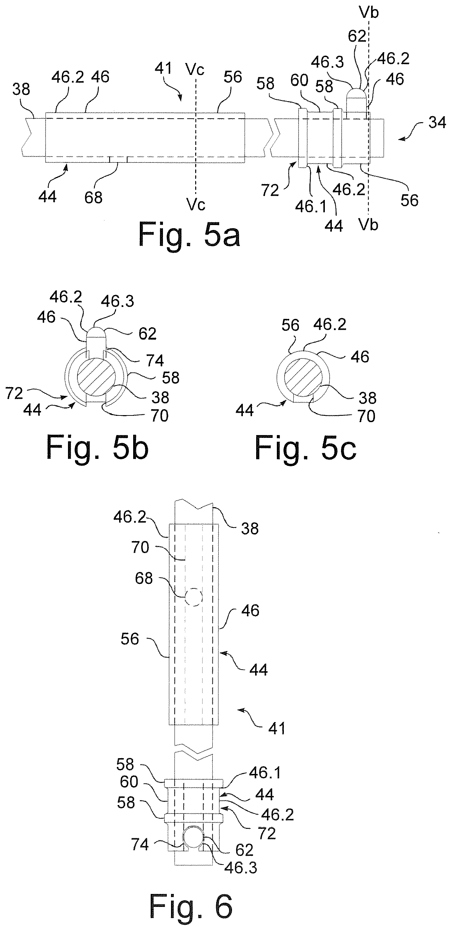

Wie den Figuren 5b, 5c und 7b ferner zu entnehmen ist, können die Positionierelemente 44 in der dort dargestellten Variante auf Grund eines längsseitig durchlaufenden Schlitzes 70 jeweils an die Tragprofile 42 angeklemmt oder jeweils auf diese aufgeschoben werden.

In Figur 6 ist beispielhaft zu erkennen, dass ein als Doppelringkragen 72 ausgebildetes Positionierelement 44 mehrere Positionierstrukturen 46, nämlich eine Anlagestruktur 46.1 und eine Auflagestruktur 46.2, bereitstellt, die ihrerseits durch zwei Ringsegmente 58 und einen Nutabschnitt 60 ausgebildet sind. In der hier dargestellten Ausführungsform weist der Doppelringkragen 72 außerdem eine Aussparung 74 auf, mittels welcher dieser zumindest bereichsweise um den hervorstehenden Pin 62 herum angeordnet ist und in axialer Richtung gleichsam auf den Pin 62 aufgeclipst werden kann. An einem derartigen Doppelringkragen 72 kann beispielsweise das Felgenhorn 48 derart angeordnet werden, dass das Fahrzeugrad 14 von der Aufnahmeeinrichtung 34 insgesamt stabiler aufgenommen wird, als dies ohne ein derartiges Positionierelement 44 der Fall wäre. Alternativ hierzu kann aber auch eine Positionierstruktur 46, welche einen Nutabschnitt 60 bereitstellt, das Felgenhorn 48 des Fahrzeugrads 14 aufnehmen und somit ebenfalls weitgehend verhindern, dass das Fahrzeugrad 14 sich während des Förderns axial entlang der Radachse A_{R} und/oder entlang der Tragebene Eₜᵣ verschiebt.

Zweckmäßige Abwandlungen der Positionierelemente 44 und der Positionierstrukturen 46, die die oben erwähnten Trag-, Fixier- und/oder Förderfunktionen erfüllen aber der Übersichtlichkeit halber nicht eigens dargestellt oder detailliert erläutert wurden, können ebenfalls von der Positionieranordnung 41 umfasst sein.

Ferner sind die Positionierelemente 44 nicht auf die in den Figuren schematisch angedeutete zylindrische Form mit zumindest abschnittsweise kreisförmigem Querschnitt beschränkt. Auch prismatische Ausgestaltungen mit zumindest abschnittsweise polygonalem Querschnitt können in der erfindungsgemäßen Positionieranordnung 41 angewandt werden. Demgemäß kann auch das Tragprofil 42 eine entsprechende Form bzw. entsprechende Querschnitte aufweisen.

In den Figuren 7a und 7b sind weitere Ausführungsbeispiele der Positionierelemente 44 und der von ihnen bereitgestellten Positionierstrukturen 46 dargestellt. Hier sind mehrere Positionierstrukturen 46, die Anlagestrukturen 46.1 und Auflagestrukturen 46.2 bereitstellen, durch einen Wellenabschnitt 64 ausgebildet, welcher seinerseits in axiale Richtung alternierend aufeinander folgende Ringsegmente 58 und Nutabschnitte 60 aufweist.

In dieser Variante wird eine Neigung der Radachse A_{R} von Fahrzeugrädern 14 kippgefährdeter Fahrzeugradtypen 40.3 und damit eine Fixierung in der Aufnahmeeinrichtung 34 nicht durch ein eingreifendes Ringsegment 58 wie im vorherigen Ausführungsbeispiel, sondern durch einen Nutabschnitt 60 des Tragprofils 42 bewirkt, in den das Felgenhorn 48 des kippgefährdeten Fahrzeugrades 14 eintauchen kann.

In diesem weiteren Ausführungsbeispiel ist das Tragprofil 42 zum Aufnehmen eines lösbar befestigbaren Positionierelements 44, insbesondere eines Positionierelements 44, das eine Eingreifstruktur 46.3 bereitstellt, mit mehreren Aufnahmelöchern 76 versehen. Hierbei kann jedes Aufnahmeloch 76 eine weitere Förderposition F_{X} definieren, insofern sich die Tangentialebenen E_{T} mindestens zweier Fahrzeugräder 14 gleicher oder unterschiedlicher Fahrzeugradtypen 40.1, 40.2, 40.3 nach Verändern der Position eines entsprechenden Positionierelementes 44 und hinsichtlich eines Zustands, bevor die Position des Positionierelements 44 verändert wurde, unterscheiden. Vorliegend stellt die von dem in der Position veränderbaren Positionierelement 44 bereitgestellte Eingreifstruktur 46.3 ihrerseits durch den hervorstehenden Pin 62 ausgebildet. Möglich sind aber ebenfalls in der Position veränderbare Positionierelemente 44, die ein oder mehrere Hülsensegmente 56, Ringsegmente 58 und/oder Wellenabschnitte 64 bereitstellen.

Beim Fördern eines Fahrzeugrads 14 kann es zu Erschütterungen während des Förderns kommen, wodurch es an den mit der Aufnahmeeinrichtung 34 zusammenwirkenden Bereichen des Fahrzeugrads 14 Reibung möglicherweise zu einer abrasiven Belastung kommen kann. Dies kann das Behandlungsergebnis des Fahrzeugrads 14 beeinträchtigen und sogar dazu führen, dass das Fahrzeugrad 14 aufgrund dessen, dass es Qualitätsanforderungen nicht genügen kann, ausgesondert wird. Auch beim Be- und Entladen der Aufnahmeeinrichtung 34 kann es zu Beschädigungen sowohl an der Aufnahmeeinrichtung 34 als auch an dem Fahrzeugrad 14 kommen.

Aus den oben genannten Gründen sind die - mit dem Fahrzeugrad 14 jeweils an den entsprechenden Förderpositionen F in Materialkontakt stehenden - Positionierstrukturen 46 zumindest bereichsweise aus einem Kunststoffmaterial gefertigt. Sowohl vergleichsweise harte Kunststoffe mit geringerer Oberflächenrauigkeit als auch vergleichsweise weiche Kunststoffe mit höherer Oberflächenrauigkeit verringern das Risiko von Beschädigungen an dem Fahrzeugrad 14.

Bei vergleichsweise weichen Kunststoffen besteht ein weiterer Vorteil außerdem darin, dass die Haftreibung zwischen der Positionierstruktur 46 und dem Fahrzeugrad 14 erhöht wird, wodurch das Fahrzeugrad 14 positionsstabiler in der Aufnahmeeinrichtung 34 aufgenommen wird.

Das Kunststoffmaterial kann dabei ein thermoplastisches Polymer, insbesondere ein Polyamid (PA), ein Polylactat (PLA), Polymethylmethacrylat (PMMA), Polyethylen (PE), Polyethylentherephthalat (PES), Polyetheretherketon (PEEK), Polytetrafluorethylen (PTFA), Polypropylen (PP), Polyvinylchlorid (PVC), Fluorkautschuk (FKM) oder eine Mischung aus den vorgenannten Materialien sein.

## Patentansprüche

1. Tragvorrichtung für Fahrzeugräder (14), insbesondere für eine Förderanlage (12) zum Fördern von Fahrzeugrädern (14) durch eine Behandlungsanlage (10), insbesondere eine Beschichtungsanlage, mit
a) einer Koppeleinrichtung (28), mittels welcher die Tragvorrichtung (26) mit einer Antriebseinrichtung einer Förderanlage (12) koppelbar ist;
b) einer Tragstruktur (32), welche mindestens eine Aufnahmeeinrichtung (34) umfasst, die dazu eingerichtet ist, ein Fahrzeugrad (14) aufzunehmen,
**dadurch gekennzeichnet, dass**
c) die Aufnahmeeinrichtung (34) eine Positionieranordnung (41) umfasst, durch welche Fahrzeugräder (14) unterschiedlicher Fahrzeugradtypen (40; 40.1, 40.2, 40.3) in unterschiedlichen Förderpositionen (F; F₁, F₂, F₃) aufnehmbar sind.

2. Tragvorrichtung nach Anspruch 1, **dadurch gekennzeichnet, dass** die Positionieranordnung (41) eine oder mehrere Positionierstrukturen (46) umfasst, durch welche für ein Fahrzeugrad (14) eines ersten Fahrzeugradtyps (40.1) eine erste Förderposition (F₁) bezogen auf die Aufnahmeeinrichtung (34) und für ein Fahrzeugrad (14) eines von dem ersten Fahrzeugradtyp (40.1) verschiedenen zweiten Fahrzeugradtyps (40.2, 40.3) eine von der ersten Förderposition (F₁) verschiedene zweite Förderposition (F₂, F₃) bezogen auf die Aufnahmeeinrichtung (34)definiert sind.

3. Tragvorrichtung nach Anspruch 2, **dadurch gekennzeichnet, dass** eine oder mehrere Positionierstrukturen (46) als Anlagestruktur (46.1), gegen welche ein Fahrzeugrad (14) in Richtung seiner Radachse (A_{R}) anliegen kann, und/oder als Auflagestruktur (46.2), auf welcher ein Fahrzeugrad (14) aufliegen kann, und/oder als Eingreifstruktur (46.3), welche in eine komplementäre Vertiefung (54; 66) oder Ausnehmung eines Fahrzeugrades (14) eingreifen kann, ausgebildet sind.

4. Tragvorrichtung nach Anspruch 2 oder 3, **dadurch gekennzeichnet, dass** eine oder mehrere Positionierstrukturen (46) in eine komplementäre, insbesondere in Umfangsrichtung umlaufende, erste Vertiefung (54, 54') eines Fahrzeugrads (14) eingreifen können.

5. Tragvorrichtung nach einem der Ansprüche 2 bis 4, **dadurch gekennzeichnet, dass** eine oder mehrere Positionierstrukturen (46) zumindest ein Hülsensegment (56) und/oder zumindest ein Ringsegment (58) und/oder zumindest einen Nutabschnitt (60) und/oder einen von der Tragstruktur hervorstehenden Pin (62) und/oder zumindest einen Wellenabschnitt (64) bereitstellen.

6. Tragvorrichtung nach einem der Ansprüche 2 bis 5, **dadurch gekennzeichnet, dass** eine oder mehrere Positionierstrukturen (46) zumindest bereichsweise aus einem Kunststoffmaterial gefertigt sind.

7. Tragvorrichtung nach Anspruch 6, **dadurch gekennzeichnet, dass** das Kunststoffmaterial ein thermoplastisches Polymer, insbesondere ein Polyamid (PA), ein Polylactat (PLA), Polymethylmethacrylat (PMMA), Polyethylen (PE), Polyethylenterephthalat (PET), Polyetheretherketon (PEEK), Polytetrafluorethylen (PTFE), Polypropylen (PP), Polyvinylchlorid (PVC), Fluorkautschuk (FKM) oder eine Mischung aus den vorgenannten Materialien ist.

8. Tragvorrichtung nach einem der Ansprüche 2 bis 7, **dadurch gekennzeichnet, dass** eine oder mehrere Positionierstrukturen (46) durch ein oder mehrere Positionierelemente (44) bereitgestellt werden.

9. Tragvorrichtung nach Anspruch 8, **dadurch gekennzeichnet, dass** ein oder mehrere Positionierelemente (44) lösbar befestigbar und/oder verschiebbar sind.

10. Tragvorrichtung nach Anspruch 8 oder 9, **dadurch gekennzeichnet, dass** ein oder mehrere Positionierelemente (44) einen längsseitig durchlaufenden Schlitz (70) aufweisen und an der Aufnahmeeinrichtung (34) anklemmbar oder zumindest auf einen Teil der Aufnahmeeinrichtung (34) aufschiebbar sind.

11. Tragvorrichtung nach einem der Ansprüche 8 bis 10, **dadurch gekennzeichnet, dass** mindestens ein Positionierelement (44) eine Aussparung aufweist, derart, dass dieses bereichsweise um ein weiteres Positionierelement (44) und/oder eine Positionierstruktur (46) herum anordenbar ist.

12. Tragvorrichtung nach einem der Ansprüche 8 bis 11, **dadurch gekennzeichnet, dass** ein oder mehrere Positionierelemente (44) zumindest abschnittsweise einen kreisförmigen oder polygonalen Querschnitt aufweisen.

13. Tragvorrichtung nach einem der vorhergehenden Ansprüche, **dadurch gekennzeichnet, dass** die Aufnahmeeinrichtung (34) zwei Tragprofile (42), insbesondere zwei parallel zueinander verlaufende Tragprofile (42), aufweist, welche eine Tragebene (Eₜᵣ) definieren und welche die Positionieranordnung (41) tragen.

14. Tragvorrichtung nach Anspruch 13 mit Rückbezug auf einen der Ansprüche 3 bis 12, **dadurch gekennzeichnet, dass** eine oder mehrere Eingreifstrukturen (46.3) auf der gleichen Seite der Tragebene (Eₜᵣ) angeordnet sind und aufeinander zuweisen, und dass diese jeweils in eine komplementäre, insbesondere in Umfangsrichtung umlaufende, zweite Vertiefung (66, 66') eines Fahrzeugrads (14) eingreifen können.

15. Tragvorrichtung nach Anspruch 13 oder 14, **dadurch gekennzeichnet, dass** die Tragprofile (42) zum Aufnehmen eines oder mehrerer lösbar befestigbarer Positionierelemente (44), insbesondere von Positionierelementen (44), die eine Eingreifstruktur (46.3) bereitstellen, mit Aufnahmelöchern (76) versehen sind, wobei durch jedes Aufnahmeloch (76) eine weitere Förderposition (F_{X}) definierbar ist.

16. Tragvorrichtung nach einem der Ansprüche 13 bis 15, **dadurch gekennzeichnet, dass** mindestens ein Fahrzeugrad (14), insbesondere ein Fahrzeugrad (14) eines kippgefährdeten Fahrzeugradtyps (40.3), derart von der Aufnahmeeinrichtung (34) aufnehmbar ist, dass seine Radachse (A_{R}) zu der Tragebene (Eₜᵣ) geneigt ist.

17. Tragvorrichtung nach einem der vorhergehenden Ansprüche, **dadurch gekennzeichnet, dass** von der Tragvorrichtung (26) zeitgleich wenigstens zwei Fahrzeugräder (14) unterschiedlicher Fahrzeugradtypen (40; 40.1, 40.2, 40.3) aufnehmbar sind.

18. Tragvorrichtung nach einem der vorhergehenden Ansprüche, **dadurch gekennzeichnet, dass** die Tragvorrichtung (26) wenigstens zwei Aufnahmeeinrichtungen (34) umfasst.

19. Förderanlage zum Fördern von Fahrzeugrädern (14) durch eine Behandlungsanlage (10), insbesondere eine Beschichtungsanlage, mit mindestens einer Tragvorrichtung (26) nach einem der Ansprüche 1 bis 18.

20. Behandlungsanlage, insbesondere Beschichtungsanlage, zum Behandeln, insbesondere zum Beschichten, von Fahrzeugrädern (14) mit einem Behandlungsmittel (16), insbesondere mit einem Beschichtungsmittel, insbesondere einem Lack, mit einer Förderanlage (12) zum Fördern von Fahrzeugrädern (14) nach Anspruch 19.

21. Verfahren zum Fördern von Fahrzeugrädern (14) durch eine Behandlungsanlage (10), insbesondere eine Beschichtungsanlage, **dadurch gekennzeichnet, dass** Fahrzeugräder (14) unterschiedlicher Fahrzeugradtypen (40; 40.1, 40.2, 40.3) in unterschiedlichen Förderpositionen (F; F₁, F₂, F₃, F_{X}) durch eine Förderanlage (12) nach Anspruch 19 gefördert werden.
